(19) Europäisches Patentamt / European Patent Office / Office européen des brevets

(11) **EP 3 644 565 A1**

(12) **EUROPEAN PATENT APPLICATION**

(43) Date of publication:
**29.04.2020 Bulletin 2020/18**

(21) Application number: **18202670.8**

(22) Date of filing: **25.10.2018**

(51) Int Cl.:
*H04L 25/02* (2006.01)　　　*G06N 3/04* (2006.01)
*G06N 3/08* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
- **DUPUIS, Nicolas 2018 ANTWERPEN (BE)**
- **DROOGHAAG, Benoit 2018 ANTWERPEN (BE)**

(74) Representative: **IP HILLS NV Hubert Frère-Orbanlaan 329 9000 Gent (BE)**

(54) **RECONSTRUCTING A CHANNEL FREQUENCY RESPONSE CURVE**

(57) Example embodiments describe an apparatus comprising means for performing obtaining (801) a training channel frequency response, CFR, curve of a transmission line (201); and omitting (802) a first subset of tones of the training CFR curve, wherein the first subset comprises tones with a magnitude below a first predefined threshold, thereby obtaining a corrupted CFR curve (602); and generating (803) based on the corrupted CFR curve a training dataset (804); and training (805), based on the training dataset (804), an artificial neural network (600) configured for reconstructing a full CFR curve based on a corrupted CFR curve.

Fig. 1

EP 3 644 565 A1

**Description**

**Technical Field**

Various example embodiments relate to reconstructing a channel frequency response curve to diagnose a transmission line.

**Background**

With the increasing bitrate offers, the deployment of Internet Protocol TeleVision, IPTV solutions, video-on-demand and triple-play services, both the system performance and customer support become more and more exigent, particularly on digital subscriber lines, DSL. The physical link which transports the information through wire lines up to the end user is known to be the bottleneck for the Quality of Service, QoS.
Moreover, recent technologies evolutions tend to increase a signal bandwidth of DSL lines. Whereas traditional asymmetric DSL, ADSL, technology uses frequencies up to 1.1 MHz, current very-high-bitrate DSL, VDSL, or even VDSL2, can be applied up to 17 or even 35MHz. In the case of G.Fast the bandwidth has even a spectrum which ranges up to 212MHz.

**Summary**

An extensive use of those high frequencies, as well as more advanced technologies to increase a performance makes a DSL link sensitive to disturbances, for example caused by impairments. To take proper actions for improving a performance when impaired, sources of problems need to be detected and recognized that are affecting the DSL link.
Amongst others, it is an object of embodiments of the present disclosure to provide a solution that improves the detections of sources of problems impairing a DSL link to let an operator intervene in an efficient and accurate way.
This object is achieved, according to a first example aspect of the present disclosure, by an apparatus as defined by claim 1, comprising means to perform:

- obtaining a training channel frequency response, CFR, curve of a transmission line; and
- omitting a first subset of tones of the training CFR curve, wherein the first subset comprises tones with a magnitude below a first predefined threshold, thereby obtaining a corrupted CFR curve; and
- generating based on the corrupted CFR curve a training dataset; and
- training, based on the training dataset, an artificial neural network configured for reconstructing a full CFR curve based on a corrupted CFR curve.

A transmission line, such as a DSL line, may be remotely diagnosed by examining a CFR curve. In a DSL context, this is a key measurement performed by a modem and representing a range of tones and their respective magnitude in dB. A CFR curve is also called Hlog. It reflects an attenuation of a medium over an emitted signal to fill a right number of bits over different frequency carriers. A CFR curve is dependent on a variety of topological factors, such as a loop length, a wire gauge, an insulation type, and/or connector properties, and sensitive to the presence of any impairments.
The presence of an impairment affects the QoS, such as, for example, a speed reduction, presence of erroneous service and/or connection losses. To repair, remedy and/or improve the QoS, impairments affecting the transmission line need to be identified and diagnosed in an efficient and accurate manner. Furthermore, the diagnose needs to be reliable to any issues affecting the line. This supports the operators by avoiding interventions on wrongly diagnosed impairments, but to act accordingly as well as efficiently, which is thus related to the level of quality of the CFR curve. Yet, the level of quality may not be controlled by an operator.
Thus, to this end, the apparatus obtains a training CFR curve of a transmission line. The transmission line is, for example, a DSL link of an existing network, or the transmission line may, for example, be an abstract transmission line from which a topological configuration is known, such as on a technical drawing used to build up or adapt a telecommunication infrastructure. The training CFR curve is representative for the transmission line and may, for example, be measured with, whether highly accurate measuring instruments or not, or even be simulated. It should thus be further understood that the training CFR curve could be used to deduce therefrom a condition of a transmission line.
Next, the means of the apparatus omits a first subset of tones of the training CFR curve by omitting tones with a magnitude below a first predefined threshold. As a result, a corrupted CFR is obtained.
Through this corrupted CFR curve, a training data set is generated, wherein the dataset can be used to train an artificial neural network for reconstructing a full CFR curve.
A real-life CFR curve is usually corrupted, this is, there are missing values in one or more several parts of its spectrum. This occurs for a variety of reasons, like unloaded or unused tones due to an operator policy, unmeasured tones because tones comprise a power lower than the measuring instrument capability, unreported tones by devices, or even bugs in devices present in the transmission line. Due to this, such a real-life CFR curve is unsuitable to perform a proper diagnosis.

Thus, by omitting a first subset of the training CFR curve, this training CFR curve represents a real-life CFR curve in a more realistic and reliable manner. In other words, the omitted subset is a realistic example of missing parts.

Subsequently, based on the corrupted CFR curve, a training dataset is generated which can be used to train an artificial neural network for reconstructing a full CFR curve based on the uncorrupted CFR curve. Differently formulated, by training an artificial neural network with the generated training dataset, the trained artificial neural network is suitable to reconstruct a full CFR from a corrupted CFR in terms of realistic channel frequency reconstructions.

Furthermore, since the training CFR curve is corrupted in a realistic and reliable way, the quality of the training dataset corresponds as well to this realistic approach and equivalent quality. Moreover, this way there is no need to obtain a collection of measured CFR curves on different spots, which can be time consuming, without however having a guarantee that the measured curves are appropriate for further processing.

According to example embodiments, the training set is further based on the training CFR curve.

Thus, the generated dataset may further, besides be based on the corrupted CFR curve, be based on the training CFR curve, thus the curve from which no values are omitted.

Since the training CFR curve comprises the values which are omitted in the corrupted CR curve, the input data for the artificial neural network together with their targets may be used to generate the training dataset, thereby further increasing the quality thereof.

According to further example embodiments, the generating further comprises:

- labelling the corrupted CFR curve based on the training CFR curve.

The generating may further comprise labelling the corrupted CFR curve by, for example, indicating the type of transmission line wherefrom the corrupted CFR curve is derived. Such a type is, for example a DSL, ADSL, VDSL, VDSL.2, G.Fast or another type of line which can be monitored through a CFR curve.

By labelling the corrupted CFR curve, it is an advantage that, on the one hand, the quality of the data set is further increased, and on the other hand, that a set of training dataset may be generated, each linked to, for example, a type of transmission line.

According to further example embodiments, the omitting further comprises, when the training CFR curve comprises a predefined number of tones with a magnitude below a second predefined magnitude threshold:

- omitting randomly a second subset of tones of the training CFR curve, the second subset comprising a predefined maximum tone range.

Thus, when the training CFR curve comprises tones having a magnitude which are partly or mainly under a second predefined magnitude threshold, a second subset of tones is randomly omitted. When, for example, the transmission line doesn't comprise any impairments such that the first subset is empty, this is no tones are omitted by the first subset, the second subset will omit tones in a randomly manner. Likewise, the omitting of tones via the second subset may be supplementary with those of the first subset. As a result, a corrupted CFR curve is obtained with two subsets wherein tones are omitted.

The second predefined magnitude threshold may, for example, correspond to a limit of a measuring instrument at which it is still capable of performing an accurate measurement. When most of the magnitudes of the tones of the training CFR curve are below this second threshold, a dropping of these tones would result in an almost empty training CFR curve. Thus, by only omitting randomly a range of tones through the second subset, the obtained corrupted CFR still can by used to derive appropriate training dataset therefrom.

According to further example embodiments, the omitting further comprises, when the training CFR curve comprises a predefined number of tones with a magnitude greater than or equal to the second predefined magnitude threshold:

- omitting tones having a magnitude below the second predefined magnitude threshold

In a subsequent condition, thus when most of the magnitudes of the tones of the training curve are above or equal to the second predefined magnitude threshold, the magnitudes below this threshold are omitted in stead of the randomly manner. Thus, when likewise, the second predefined magnitude threshold corresponds to the measuring capability, a corrupted CFR curve is obtained corresponding to a real-life situation.

According to further example embodiments, the omitting further comprises, when the training CFR curve comprises tones having an indeterminable magnitude:

- omitting tones adjacent to the tones having an indeterminable magnitude by a predefined adjacent tone range.

An indeterminable magnitude is, for example, a range of unmeasured tones due to an impairment and thus missing, or a range wherein noise is present which makes a determination of magnitudes uncertain or incorrect. These unmeasured tones may, for example, be simulated when shaping the training CFR curve.

Since tones having an indeterminable magnitude, any deduction of a condition of a transmission line based on these tones leads to improper conclusion. Thus, by omitting the tones having an indeterminable magnitude, the quality of the training dataset generated based on a corrupted CFR curve where those tones are omitted is increased.

Additionally, the means of the apparatus are further configured to perform:

- obtaining a topological configuration of the transmission line; and

wherein the omitting further comprises, when the topological configuration comprises a bridge tap representative for causing an attenuation of a range of tones:

- omitting the range of tones from the training CFR curve.

A bridge tap is a double path and affects the QoS of the transmission line. It is characterized by a length, a termination and a type of cable and its impedance. Due to the presence of a bridge tap, dips in the shape of a real-life CFR curve may be present. Thus, by obtaining the topological configuration and identifying if a bridge tap is present which is representative for causing an attenuation of a range of tones dependent on the characteristics of the bridge tap, the range is omitted from the training CFR curve. This way, the corrupted CFR curve obtained therefrom corresponds to a CFR curve when measured on site of the transmission line. It is thus an advantage that the training dataset will also be appropriate for transmission lines comprising a bridge tap.

According to further example embodiments, the artificial neural network is a deep convolutional auto-encoder, DAE, configured for reconstructing a full CFR curve from a corrupted CFR curve.

A DAE is able to make use of neighbouring information and to mitigate it to optimally missing values. Furthermore, through the use of several convolutional layers, and not only making use of close-neighbouring values to infer right values to fill in but also to leverage distant patterns identified further in a curve, a DAE is preferred to reconstruct a CFR curve. More in particular, a DAE has the ability to learn patterns expected in the presence of electrical impairments as well as to mitigate local and distant spatial neighbouring information.

Furthermore, since deep learning requires very large training data sets, the use of generated training dataset allows to train the DAE in an efficient and accurate manner.

According to example embodiments, the DAE comprises 2-convolutional stages comprising a first and second convolutional stage; and wherein the first convolutional stage comprises filters larger than filters of the second convolutional stage.

A DAE comprising 2-convolutional stages has a higher performance compared to one, three, or four layers, since the nature of impairments patterns present in a transmission line usually exists of one or several kernel patterns that get repeated through a sequence.

Furthermore, by using a collection of larger filters in the first convolutional layer, and a selection of smaller filters in the second convolutional layer, the amount of self-extracted features used in the generative parts of the DAE to reconstruct the missing part is manageable.

According to further example embodiments, the 2-convolutional stages are configured to produce a feature map configured to mitigate tones outside omitted tones of a corrupted CFR curve.

The feature map thus mitigates tones which are not omitted but well measured.

According to further example embodiments, pooling layers of the DAE are discarded.

A non-usage of pooling avoids a reduction of too much information, which is not convenient for reconstructing a CFR curve.

According to further example embodiments, the training of the artificial neural network comprises the step of weighting:

- a global reconstruction error indicative for a root-mean-square deviation between the training CFR curve and the reconstructed training CFR curve; and
- a local reconstruction error indicative for a root-mean-square deviation between omitted tones of the corrupted training CFR curve and magnitudes of reconstructed tones therefrom; and
- a local deviation error indicative for a maximum deviation between a peak value of the training CFR curve in a range of omitted tones and a mean value of the corrupted training CFR curve in the extremities of the range; and

wherein the weighting is performed by prioritizing the local reconstruction error and/or the local deviation error.

The global reconstruction error sets a global objective of reconstructing the complete curve, while the local reconstruction error focusses on the omitted parts. Furthermore, the local deviation error focusses on a maximum deviation between a peak value of a magnitude within an omitted part and the magnitude values at the extremities of this omitted part. Each of the errors is weighted, and by prioritizing the local reconstruction error and/or the local deviation error, this is giving it more weight, it is enforced that the reconstruction within omitted or corrupted part is given more importance with respect to the reconstruction of the entire curve. This way, the DAE is trained such that is effective and efficient in reconstructing an output CFR curve from an input CFR curve comprising omitted parts.

According to a second example aspect of the present disclosure a method is disclosed comprising the steps of:

- obtaining a training channel frequency response, CFR, curve of a transmission line; and
- omitting a first subset of tones of the training CFR curve, wherein the first subset comprises tones with a magnitude below a first predefined threshold, thereby obtaining a corrupted CFR curve; and
- generating based on the corrupted CFR curve a training dataset (804); and
- training, based on the training dataset, an artificial neural network configured for reconstructing a full CFR curve based on a corrupted CFR curve.

According to example embodiments, the method further comprises:

- deploying the trained artificial neural network in another apparatus for identifying impairments of transmission lines.

In other words, in some embodiments, training the DAE and using the trained DAE as a preliminary step for detecting impairments may be performed by two different apparatuses. The deploying thus comprises sending data representative of the architecture and/or parameters of the trained DAE to the other apparatus.

According to a third aspect, computer program product is disclosed comprising computer-executable instructions for performing the following steps when the program is run on a computer:

- obtaining a training channel frequency response, CFR, curve of a transmission line; and
- omitting a first subset of tones of the training CFR curve, wherein the first subset comprises tones with a magnitude below a first predefined threshold, thereby obtaining a corrupted CFR curve; and
- generating based on the corrupted CFR curve a training dataset (804); and
- training, based on the training dataset, an artificial neural network configured for reconstructing a full CFR curve based on a corrupted CFR curve.

## Brief Description of the Drawings

Some example embodiments will now be described with reference to the accompanying drawings.

Fig. 1 shows an example embodiment of a measured Hlog of a healthy DSL line; and

Fig. 2 shows an example embodiment of the presence of a bridge tap in a DSL line;

Fig. 3 shows an example embodiment of the presence of a bridge tap in a Hlog; and

Fig. 4 shows an example embodiment of channel frequency responses with missing values; and

Fig. 5 shows an example embodiment of a large and deep dip in a channel frequency response curve; and

Fig. 6 shows an example embodiment of a convolutional auto-encoder; and

Fig. 7 illustrates an example embodiment of weighting a local, global and L1 error; and

Fig. 8A illustrates an example embodiment of steps performed to generate a dataset; and

Fig. 8B illustrates an example embodiment of steps performed to omit tones from a challenge frequency response curve; and

Fig. 9 shows an example embodiment of a suitable computing system 900 for performing one or several steps in embodiments of the invention.

**Detailed Description of Embodiment(s)**

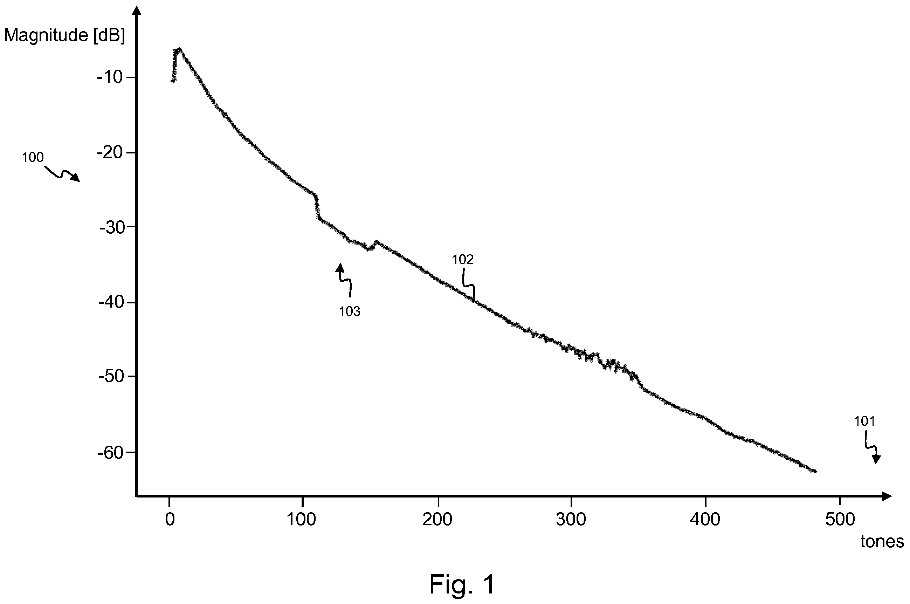

A transmission medium channel frequency response, CFR, curve, commonly expressed in dB and called Hlog in a digital subscriber lines, DSL, context, is a key measurement performed by modems. In Fig. 1 such a CFR curve is illustrated comprising the CFR curve 102 having per tones 101 a magnitude expressed in dB 100. The CFR curve 102 reflects the attenuation of the medium over an emitted signal and is vital to fill the right number of bits over the different frequency carriers 101. In a CFR curve, such as curve 102, as a calibration between measurements performed at the far-end side or near-end side may differ, a CFR curve may present jumps between the different downstream, measured at far-end side, and upstream, measured at near-end side, frequency bands measurements. This is illustrated in curve 102 between the tones hundred and hundred fifty 103. Typically, a CFR curve or Hlog curve is standardized to five hundred and twelve carrier groups.

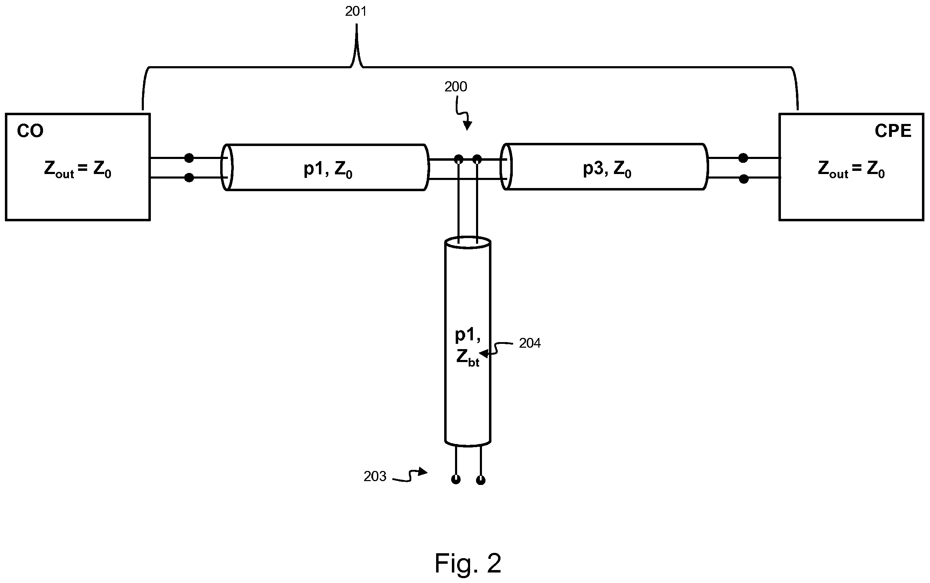

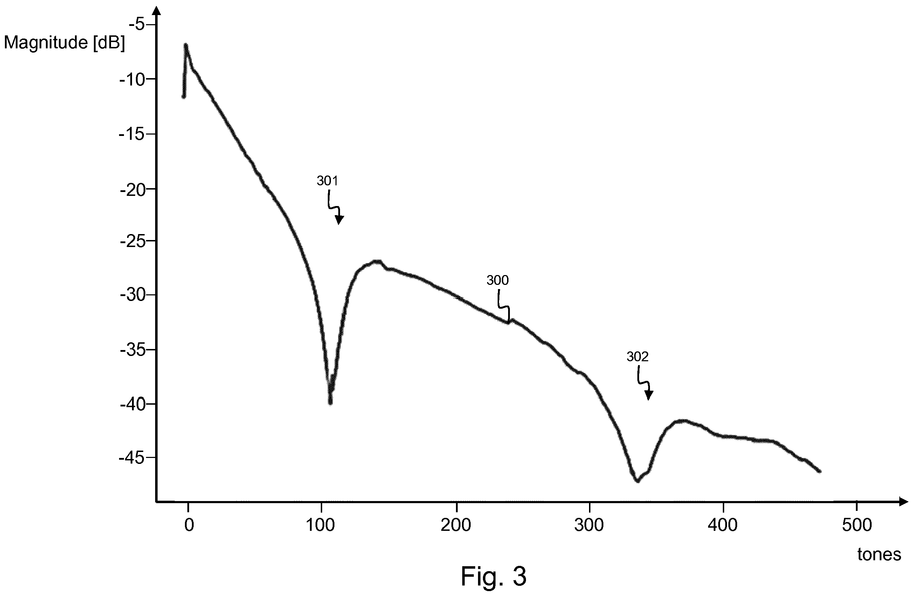

A curve, such as curve 102, is dependent on a variety of topological factors, such as a loop length, a wire gauge, such a line impedance, an insulation type, connector properties, and others. A CFR curve is also sensitive to the presence of any impairments or, in general, to the presence of any unexpected topological configuration. For example, in the presence of a double path, commonly called bridge tap, as illustrated in Fig. 2 by bridge tap 200, a CFR curve or Hlog presents a number of dips in its shape. Such dips are illustrated in Fig. 3.

In Fig. 2 it is illustrated that a bridge tap 200 is a piece of cable connected to a main loop 201 on a location in the path.

The number of dips in a CFR curve, the shapes thereof and their location depend on the characteristics of the bridge tap 200, such as the length of the bridge tap 200, the termination of the bridge tap 203, such as open or connected to, for example, a phone, the type of cable, gauge of insulator, of the bridge tap 200, or more in particular to its impedance 204. In curve 300 in Fig. 3 dips are illustrated by 301 and 302.

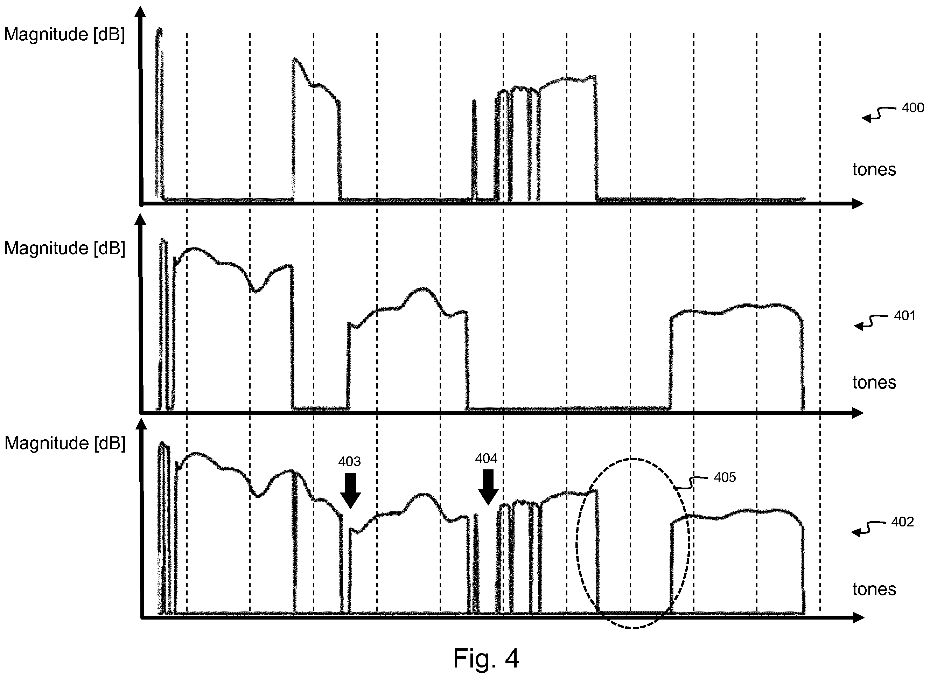

When measuring CFR curves in real-life situations, a measured CFR curve is however usually corrupted, this is, presenting missing values in one or more several parts of its spectrum. This occurs for various of reasons, ranging from unloaded or unused tones for administrative reasons, unmeasured tones because of too low power limiting the measurement capabilities, unreported tones because of devices do not report some tones, or even a bug in a customer premises equipment, CPE, device, thus because of an unknown reason. In each of these cases, a CFR curve is incomplete., thereby not allowing to perform any diagnosis and/or return a correct output. An example of such issues in illustrated in Fig. 4.

Besides a DSL, in other digital communication media, such as power line communication, PLC, or wireless also similar CFR curves likewise suffering from similar corruption behaviour may be measured.

In Fig. 4 a Hlog downstream CFR curve 400, an upstream CFR curve 401, and an aggregated curve 402 of the down- and upstream is illustrated. In the aggregated CFR curve 402, missing parts are present, such as part or range 403, range 404, and range 405. Using this input CFR curve 402 as such does not allow to return a diagnosis and/or a correct diagnosis.

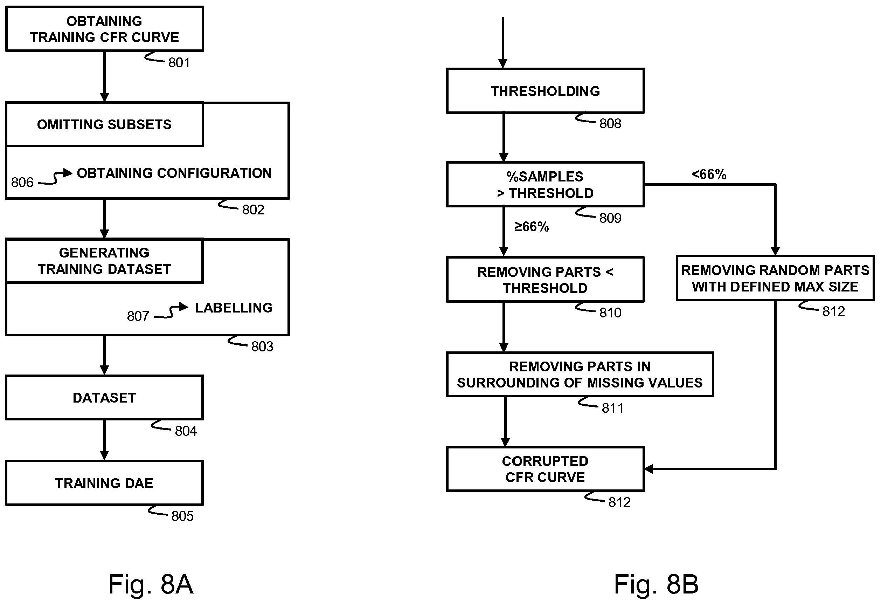

To reconstruct missing parts in a CFR curve, such as in curve 402, a method and system taking a self-learning approach able to reconstruct such channel frequency curves to reconstruct or transform an input curve to present the highest impairment recognition or classification is disclosed. Steps performed to achieve such a reconstruction are illustrated in Fig. 8A.

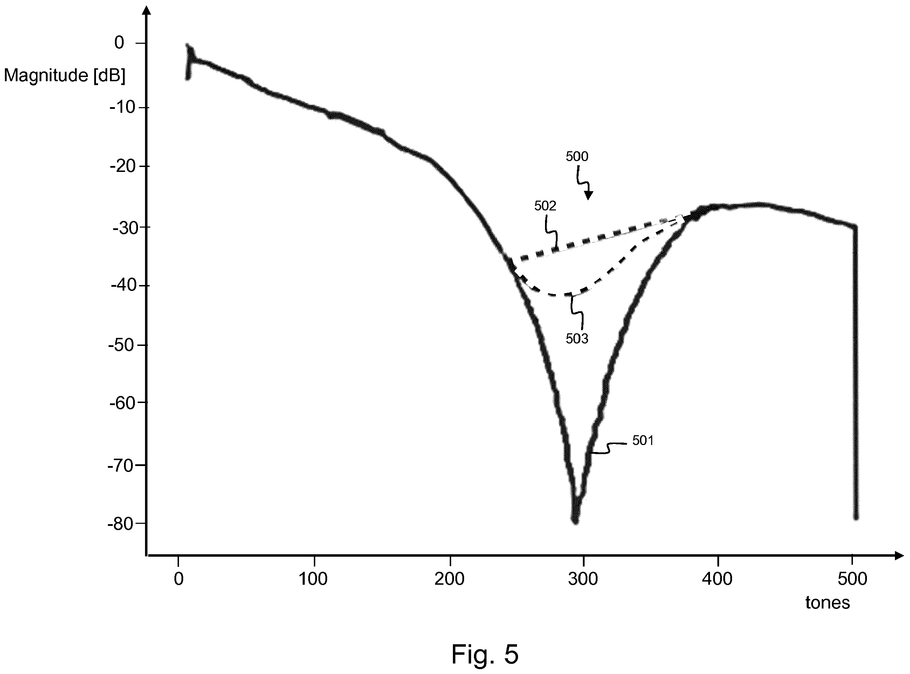

In classical interpolation methods, like for example linear or quadratic interpolation, splines, or Bezier, a recognition or classification approach fails, as illustrated in Fig. 5. In Fig. 5 an original CFR curve is illustrated that exhibits a large and deep dip 501, which is the characteristics of a line impacted by a given type of bridge tap, such as bridge tap 200. However, in real-life retrieve Hlog data, the sequence may not represent the dip 501, but tones in the ranges may be absent or omitted. To fill such an omitted gap, using classical interpolation methods, for instance a linear interpolation method 502, does not reconstruct the original curve 501 and moreover tends to remove the interesting impairment patterns critical for an accurate recognition or classification. In the case of a spline interpolation 503, the shape and amplitude of the pattern does not match neither with the original one nor with the impairment. This leads to return wrong diagnosis and false positive, which is not suitable in a troubleshooting process.

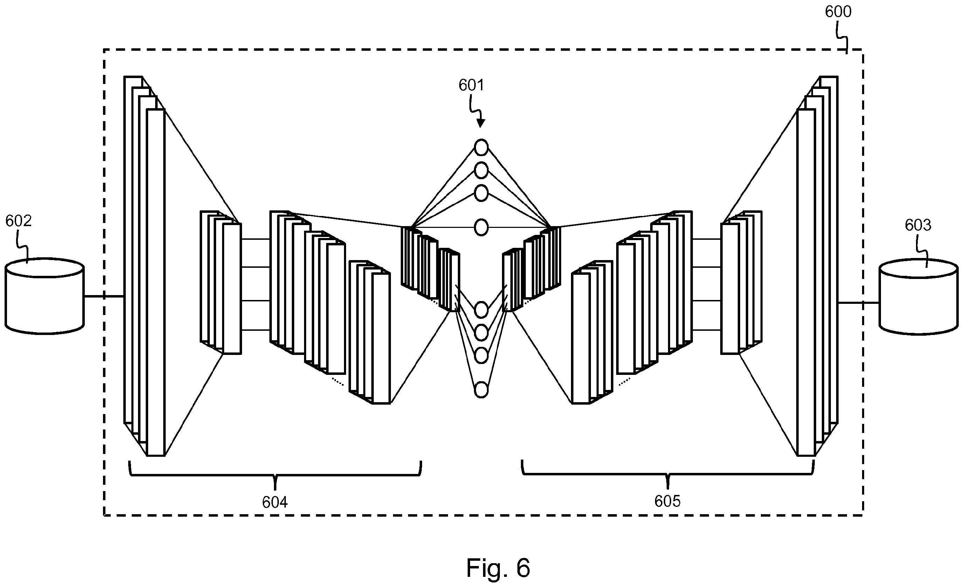

To fill the missing value of CFR curves to be as close as possible from the original complete curve, and to present the highest recognition and classification performance, deep learning is used, and more in particular a deep convolutional auto-encoder, DAE, as illustrated in Fig. 6 by DAE 600 is configured and trained. Since shapes, patterns, signatures and/or repetitions present in a Hlog are rather characteristic, basically classical interpolation methods tend to fail in succeeding two just mentioned goals. Hence, a method and apparatus is configured which can learn these characteristic shapes, pattern, signatures and/or repetitions in order to reconstruct the CFR curve or Hlog optimally and correctly.

In a first step, a training CFR curve is obtained 801. Next, in a second step, from the training CFR curve, subsets of tones are omitted 806. In Fig. 8B an example embodiment is illustrated of omitting 802 subsets of tones from the training CFR curve. In a first sub step of the step of omitting 802, a threshold is set 808, which may for example corresponds to a measuring capability of measuring instruments used to measure a real-life CFR curve, and is set at for example -55dB. Next, it is verified how many samples or tones of the training CFR curve are lower than the thresholding 808. If less than sixty six percent of the samples are below the threshold 801, in a subsequent sub step, random parts with a predefined maximum tone range are removed or omitted 812 from the training CFR curve. In the other condition, this is when sixty six percent of the samples is equal to or greater than the set threshold 808, the tones or samples below the threshold are removed or omitted 810. Additionally, in a last sub step, parts in the surrounding of missing or indeterminable values may also be removed or omitted 811. As a result, a corrupted CFR curve is obtained 812, wherein corrupted parts are simulated through one or more of the steps 808-812.

Additionally, or alternatively, the omitting 802 may also occur by obtaining 806 a topological configuration of a transmission line, such as for example as illustrated in Fig. 2, wherein impairments are present representative for an attenuation of a range of tones. In this occurrence, this range of tones is omitted 802 from the obtained 801 training CFR curve, thereby obtaining a corrupted CFR curve.

Through the omitting 802, the training CFR curve is corrupted in a realistic way by taking into account both statistical analysis from real world network samples as well as domain knowledge, since for example lower values usually are not measured or reported by modems.

Next, based on the corrupted CFR curve, a training dataset is generating 803, wherein the dataset may further be labelled 807, wherein the labelled 807 data set may further by useful for classification performances evaluation.

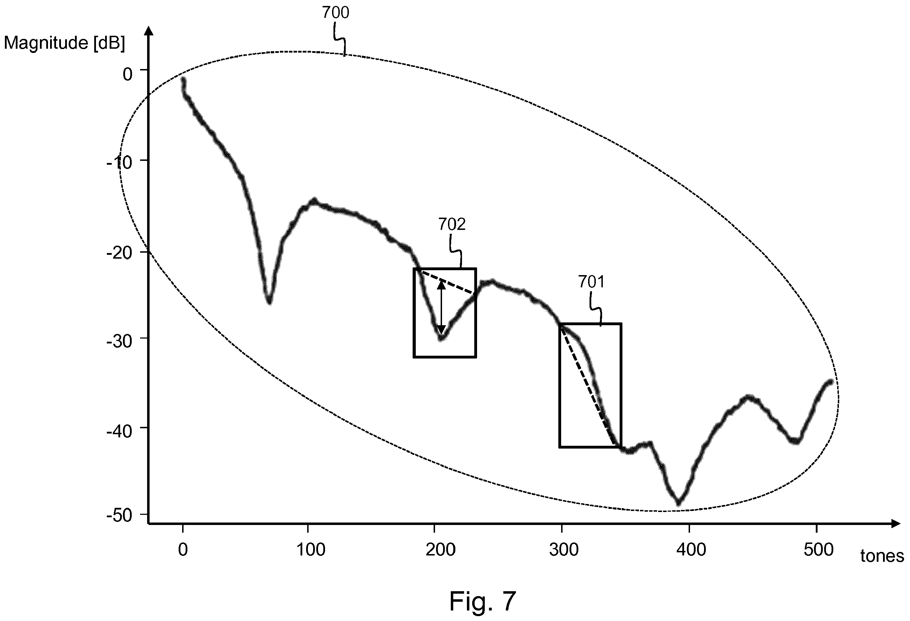

Next, the generated dataset is further used 804 to train 805 the DAE 600. To train 805 and optimize the DAE 600, an error-specific definition is used for global, local, and L1 errors, as illustrated in Fig. 7. Instead of merely setting a global objective of regenerating a complete curve, besides a global reconstruction error 700 or $RMSE_{global}$, also a local reconstruction error 701 or $RMSE_{local}$, and a L1 or local deviation error 702 or $L1_{local}$ is taken into account. Subsequently, these errors are weighted by respectively weighting factors w1, w2, and w3. The error becomes:

$$\text{Error} = w1 * RMSE_{global} + w2*RMSE_{local} + w3* L1_{local} \qquad (Eq.1)$$

with

$$RMSE_{global} - sqrt(sum((target-x_i)\wedge2); \qquad (Eq.2)$$

with

$$RMSE_{local} = sqrt(sum((target[missing\_parts]-x[missing\_parts]_i)\wedge2)); \qquad (Eq.3)$$

with

$$L1_{local} = max(target[missing\_parts]-x_i[missing\_parts]); \qquad (Eq.4)$$

with *w1*, *w2*, and *w3* being the weighting factors, *target* the original curve and $x_i$ the reconstructed curve at iteration i. Forming such specific error allows for instance to enforce the importance given to the reconstruction within the corrupted parts and not the regeneration of the entire curve.

The DAE 600 is trained and may, for example, comprise a feature extraction part 604, a curve generation part 605, and a feature map 601. As working with input of sequences of 512 samples, and depending on the nature of the omitted values to reconstruct, a preferred DAE can make us of a collection of larger filters in a first convolutional layer, for example 64 filters of size 64, and a collection of smaller filters in a second convolutional layer, for example 64 filters of size 16. With such a topology, the amount of self-extracted features used in the generative parts of the DAE 600 to reconstruct the missing parts is 512*64*64=2^21.

When trained 805, the DAE 600 is then suitable to reconstruct from an inputted incomplete CFR curve 602, a reconstructed CFR curve 603, suitable to diagnose a transmission line.

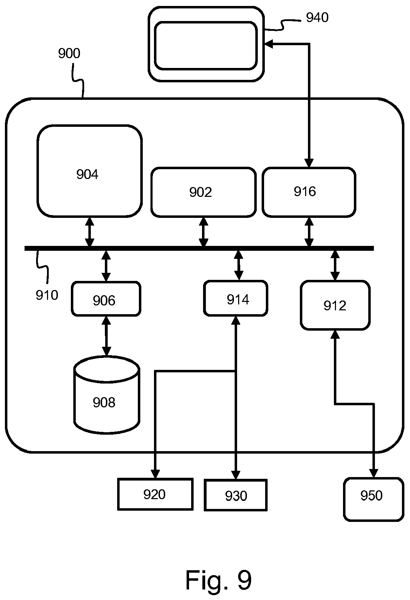

Fig. 9 shows a suitable computing system 900 enabling to implement embodiments of the method for generating 803 training data set for training a DAE 600 for constructing a CFR curve 603. Computing system 900 may in general be formed as a suitable general-purpose computer and comprise a bus 910, a processor 902, a local memory 904, one or more optional input interfaces 914, one or more optional output interfaces 916, a communication interface 912, a storage element interface 906, and one or more storage elements 908. Bus 910 may comprise one or more conductors that permit communication among the components of the computing system 900. Processor 902 may include any type of conventional processor or microprocessor that interprets and executes programming instructions. Local memory 904 may include a random-access memory (RAM) or another type of dynamic storage device that stores information and instructions for execution by processor 902 and/or a read only memory (ROM) or another type of static storage device that stores static information and instructions for use by processor 902. Input interface 914 may comprise one or more conventional mechanisms that permit an operator or user to input information to the computing device 900, such as a keyboard 920, a mouse 930, a pen, voice recognition and/or biometric mechanisms, a camera, etc. Output interface 916 may comprise one or more conventional mechanisms that output information to the operator or user, such as a display 940, etc. Communication interface 912 may comprise any transceiver-like mechanism such as for example one or more Ethernet interfaces that enables computing system 900 to communicate with other devices and/or systems, for example with other computing devices 950. The communication interface 912 of computing system 900 may be connected to such another computing system by means of a local area network (LAN) or a wide area network (WAN) such as for example the internet. Storage element interface 906 may comprise a storage interface such as for example a Serial Advanced Technology Attachment (SATA) interface or a Small Computer System Interface (SCSI) for connecting bus 910 to one or more storage elements 908, such as one or more local disks, for example SATA disk drives, and control the reading and writing of data to and/or from these storage elements 908. Although the storage element(s) 908 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. An apparatus comprising means for performing:

   - obtaining (801) a training channel frequency response, CFR, curve of a transmission line (201); and
   - omitting (802) a first subset of tones of the training CFR curve, wherein the first subset comprises tones with a magnitude below a first predefined threshold, thereby obtaining a corrupted CFR curve (602); and
   - generating (803) based on the corrupted CFR curve a training dataset (804); and
   - training (805), based on the training dataset (804), an artificial neural network (600) configured for reconstructing a full CFR curve based on a corrupted CFR curve.

2. The apparatus according to claim 1, wherein the training set is further based on the training CFR curve.

3. The apparatus according to any one of the preceding claims, wherein the generating (803) further comprises:

   - labelling (807) the corrupted CFR curve based on the training CFR curve.

4. The apparatus according to any one of the preceding claims, the omitting (802) further comprising, when the training CFR curve comprises a predefined number of tones with a magnitude below a second predefined magnitude threshold:

   - omitting (802) randomly a second subset of tones of the training CFR curve, the second subset comprising a predefined maximum tone range.

5. The apparatus according to any one of the preceding claims, the omitting (802) further comprising, when the training CFR curve comprises a predefined number of tones with a magnitude greater than or equal to the second predefined magnitude threshold:

   - omitting (802) tones having a magnitude below the second predefined magnitude threshold.

6. The apparatus according to claim 5, the omitting (802) further comprising, when the training CFR curve comprises tones having an indeterminable magnitude:

   - omitting (802) tones adjacent to the tones having an indeterminable magnitude by a predefined adjacent tone range.

7. The apparatus according to any one of the preceding claims, wherein the means are further configured to perform:

   - obtaining (806) a topological configuration of the transmission line; and

   wherein the omitting (802) further comprises, when the topological configuration comprises a bridge tap representative for causing an attenuation of a range of tones:

   - omitting (802) the range of tones from the training CFR curve.

8. The apparatus according to any one of the preceding claims, wherein the artificial neural network is a deep convolutional auto-encoder (600), DAE, for reconstructing a full CFR curve (603) from a corrupted CFR curve (602).

9. The apparatus according to claim 8, wherein the DAE (600) comprises 2-convolutional stages comprising a first and second convolutional stage; and wherein the first convolutional stage comprises filters larger than filters of the second convolutional stage.

10. The apparatus according to claim to 9, wherein the 2-convolutional stages are configured to produce a feature map (601) configured to mitigate tones outside omitted tones of a corrupted CFR curve (602).

11. The apparatus according to any one of the claims 8 to 10, wherein pooling layers are discarded.

12. The apparatus according to any one of the preceding claims, wherein training said artificial neural network (600) comprises the step of weighting:

- a global reconstruction error (700) indicative for a root-mean-square deviation between the training CFR curve and the reconstructed training CFR curve; and
- a local reconstruction error (701) indicative for a root-mean-square deviation between omitted tones of the corrupted training CFR curve and magnitudes of reconstructed tones therefrom; and
- a local deviation error (702) indicative for a maximum deviation between a peak value of the training CFR curve in a range of omitted tones and a mean value of the corrupted training CFR curve in the extremities of the range; and

wherein the weighting is performed by prioritizing the local reconstruction error and/or the local deviation error.

13. A method comprising the steps of:

- obtaining (801) a training channel frequency response, CFR, curve of a transmission line (201); and
- omitting (802) a first subset of tones of the training CFR curve, wherein the first subset comprises tones with a magnitude below a first predefined threshold, thereby obtaining a corrupted CFR curve (602); and
- generating (803) based on the corrupted CFR curve a training dataset (804); and
- training (805), based on the training dataset (804), an artificial neural network (600) configured for reconstructing a full CFR curve based on a corrupted CFR curve.

14. A method according to claim 13, further comprising the step of:

- deploying the trained artificial neural network in another apparatus for identifying impairments of transmission lines.

15. A computer program product comprising computer-executable instructions for performing the following steps when the program is run on a computer:

- obtaining (801) a training channel frequency response, CFR, curve of a transmission line (201); and
- omitting (802) a first subset of tones of the training CFR curve, wherein the first subset comprises tones with a magnitude below a first predefined threshold, thereby obtaining a corrupted CFR curve (602); and
- generating (803) based on the corrupted CFR curve a training dataset (804); and
- training (805), based on the training dataset (804), an artificial neural network (600) configured for reconstructing a full CFR curve based on a corrupted CFR curve.

Fig. 1

EP 3 644 565 A1

Fig. 2

Fig. 3

Fig. 4

Fig. 5

EP 3 644 565 A1

Fig. 6

Fig. 7

Fig. 8A

Fig. 8B

Fig. 9

# EP 3 644 565 A1

|  | Europäisches Patentamt<br>European Patent Office<br>Office européen des brevets | **EUROPEAN SEARCH REPORT** | Application Number<br>EP 18 20 2670 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/123027 A1 (CIOFFI JOHN M [US] ET AL) 9 June 2005 (2005-06-09)<br>* abstract *<br>* paragraph [0053] - paragraph [0058] *<br>* paragraph [0082] - paragraph [0090] *<br>* figures 3, 5-7 *<br>----- | 1-15 | INV.<br>H04L25/02<br>G06N3/04<br>G06N3/08 |
| A | EP 1 580 730 A2 (HARMAN BECKER AUTOMOTIVE SYS [CA]) 28 September 2005 (2005-09-28)<br>* abstract *<br>* paragraph [0010] - paragraph [0011] *<br>* paragraph [0032] *<br>* paragraph [0064] - paragraph [0066] *<br>----- | 1,13,15 | |
| A | CN 108 226 892 A (UNIV TIANJIN) 29 June 2018 (2018-06-29)<br>* the whole document *<br>----- | 1,13,15 | |
| A | Pramod Chandrayan: "Deep Learning : Autoencoders Fundamentals and types",<br>,<br>19 September 2017 (2017-09-19),<br>XP055577080,<br>Retrieved from the Internet:<br>URL:https://codeburst.io/deep-learning-typ es-and-autoencoders-a40ee6754663<br>[retrieved on 2019-04-03]<br>* the whole document *<br>----- | 8-11 | TECHNICAL FIELDS SEARCHED (IPC)<br>H04L<br>G06N |
| A | Ali Harakeh: "Lecture 6: Convolutional Neural Networks",<br>,<br>11 July 2017 (2017-07-11), XP055577106,<br>Retrieved from the Internet:<br>URL:http://wavelab.uwaterloo.ca/wp-content /uploads/2017/04/Lecture_6.pdf<br>[retrieved on 2019-04-03]<br>* Section 5 *<br>-----<br>-/-- | 8-11 | |

The present search report has been drawn up for all claims

| Place of search | Date of completion of the search | Examiner |
|---|---|---|
| The Hague | 3 April 2019 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 18 20 2670

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PASCAL VINCENT ET AL: "Stacked Denoising Autoencoders: Learning Useful Representations in a Deep Network with a Local Denoising Criterion Pierre-Antoine Manzagol", JOURNAL OF MACHINE LEARNING RESEARCH, vol. 11, 1 January 2010 (2010-01-01), pages 3371-3408, XP055577183, * abstract * * page 3393 - page 3395 * ----- | 12 | |

TECHNICAL FIELDS
SEARCHED       (IPC)

The present search report has been drawn up for all claims

| Place of search | Date of completion of the search | Examiner |
|---|---|---|
| The Hague | 3 April 2019 | Papadakis, Georgios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 644 565 A1**

## ANNEX TO THE EUROPEAN SEARCH REPORT
## ON EUROPEAN PATENT APPLICATION NO.

EP 18 20 2670

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2019

| Patent document cited in search report | | | Publication date | Patent family member(s) | | | Publication date |
|---|---|---|---|---|---|---|---|
| US 2005123027 | A1 | | 09-06-2005 | AT | 534212 | T | 15-12-2011 |
| | | | | AU | 2004298117 | A1 | 23-06-2005 |
| | | | | CA | 2548736 | A1 | 23-06-2005 |
| | | | | CN | 1914855 | A | 14-02-2007 |
| | | | | CN | 102710445 | A | 03-10-2012 |
| | | | | EP | 1700423 | A2 | 13-09-2006 |
| | | | | EP | 2259495 | A1 | 08-12-2010 |
| | | | | EP | 2259564 | A1 | 08-12-2010 |
| | | | | JP | 4891778 | B2 | 07-03-2012 |
| | | | | JP | 5519608 | B2 | 11-06-2014 |
| | | | | JP | 2007513556 | A | 24-05-2007 |
| | | | | JP | 2012054972 | A | 15-03-2012 |
| | | | | US | 2005123027 | A1 | 09-06-2005 |
| | | | | US | 2005123028 | A1 | 09-06-2005 |
| | | | | US | 2008071516 | A1 | 20-03-2008 |
| | | | | WO | 2005057857 | A2 | 23-06-2005 |
| EP 1580730 | A2 | | 28-09-2005 | CA | 2501989 | A1 | 23-09-2005 |
| | | | | CN | 1737906 | A | 22-02-2006 |
| | | | | EP | 1580730 | A2 | 28-09-2005 |
| | | | | JP | 2005275410 | A | 06-10-2005 |
| | | | | KR | 20060044629 | A | 16-05-2006 |
| | | | | US | 2006031066 | A1 | 09-02-2006 |
| CN 108226892 | A | | 29-06-2018 | NONE | | | |

EPO FORM P0459

For more details about this annex : see Official Journal of the European Patent Office, No. 12/82